# EUROPÄISCHE PATENTSCHRIFT

(11) **EP 3 953 611 B1**
(45) Veröffentlichungstag und Bekanntmachung des Hinweises auf die Patenterteilung: **23.08.2023**
(21) Anmeldenummer: 20713168.1
(22) Anmeldetag: 12.03.2020
(51) Int. Cl.: F16C 25/06, F16H 1/14, F16H 57/038, F16C 19/54, F16C 35/077, F16C 35/073, F16H 57/022, F16C 33/72, F16C 35/067

(54) **GETRIEBE MIT WINKELGETRIEBESTUFE UND GEHÄUSE**
GEAR UNIT WITH ANGULAR GEAR STAGE AND HOUSING
RÉDUCTEUR AVEC ÉTAGE D'ENGRENAGE ANGULAIRE ET CARTER

(30) Priorität: 12.04.2019 DE 102019002701
(43) Veröffentlichungstag der Anmeldung: 16.02.2022
(73) Patentinhaber: SEW-EURODRIVE GmbH & Co. KG, 76646 Bruchsal (DE)
(72) Erfinder: HANNET, Stefan, 68723 Schwetzingen (DE)
(86) Internationale Anmeldenummer: PCT/EP2020/025129
(87) Internationale Veröffentlichungsnummer: WO 2020/207624

(56) Entgegenhaltungen:
- DE-A1-102015 200 741
- US-A1- 2006 048 595
- US-B1- 6 328 655

## Beschreibung

Die Erfindung betrifft ein Getriebe mit Winkelgetriebestufe und Gehäuse und ein Verfahren zum Herstellen des Getriebes.

Es ist allgemein bekannt, dass Passscheiben zum Einstellen einer gewünschten Position von Teilen verwendet werden.

Aus der DE 10 2015 200 741 A1 ist als nächstliegender Stand der Technik ein Getriebe und ein Verfahren zum Einstellung des Verdrehspiels dieses Getriebe bekannt.

Aus der US 2012 / 0 295 753 A1 ist ein Verfahren zum Einstellen einer Vorspannung eines Lagers bekannt.

Aus der DE 92 16 915 U1 ist ein Radnabenlager bekannt.

Aus der US 3 260 132 A ist ein Differentialgetriebe bekannt.

Aus der DE 102 56 752 C5 ist ein Standard-Getriebe bekannt.

Aus der DE 10 2008 026 806 A1 ist ein Getriebe bekannt.

Aus der US 2006/048595 A1 ist ein Kegelgetriebe bekannt.

Aus der US 6 328 655 B1 ist ein Adaptersystem bekannt.

Der Erfindung liegt daher die Aufgabe zugrunde, ein Getriebe mit Winkelgetriebestufe und Gehäuse weiterzubilden, wobei die Standzeit erhöhbar sein soll.

Erfindungsgemäß wird die Aufgabe bei dem Getriebe mit Winkelgetriebestufe und Gehäuse nach den in Anspruch 1 angegebenen Merkmalen gelöst.

Wichtige Merkmale der Erfindung bei dem Getriebe mit Winkelgetriebestufe und Gehäuse sind, dass ein erstes Verzahnungsteil der Winkelgetriebestufe mit einer Welle drehfest verbunden ist,
wobei die Welle zusammen mit dem ersten Verzahnungsteil über ein erstes Lager und über ein zweites Lager drehbar gelagert ist,
wobei das erste Lager im Gehäuse aufgenommen ist und das zweite Lager im Gehäuse aufgenommen ist,
wobei das Gehäuse einen ersten Innengewindeabschnitt und einen davon axial beabstandeten zweiten Gewindeabschnitt aufweist,
wobei eine in den ersten Innengewindeabschnitt eingeschraubte Gewindemutter, insbesondere in axialer Richtung, auf den Außenring des ersten Lagers drückt,
wobei der Innenring des ersten Lagers gegen eine Stufe der Welle angestellt ist,
wobei eine in den zweiten Innengewindeabschnitt eingeschraubte Gewindemutter, insbesondere entgegen der axialen Richtung, auf den Außenring des zweiten Lagers drückt,
wobei der Innenring des zweiten Lagers gegen das erste Verzahnungsteil, insbesondere gegen eine Stufe des ersten Verzahnungsteils, oder gegen eine Stufe der Welle angestellt ist.

Von Vorteil ist dabei, dass keine Distanzscheiben oder Passscheiben zum Einstellen der Lagerspannung notwendig sind. Denn durch asynchrones Schrauben der beiden Gewindemuttern ist die Lagerspannung einstellbar und durch synchrones Schrauben das Spiel der Winkelgetriebestufe. Somit ist durch bloße Wahl der Art des Schraubens die Lagerspannung oder das Spiel einstellbar.

Bei einer vorteilhaften Ausgestaltung ist die erste Gewindemutter auf der vom zweiten Lager abgewandten Seite des ersten Lagers angeordnet. Von Vorteil ist dabei, dass die Gewindemutter von außen betätigbar ist.

Bei einer vorteilhaften Ausgestaltung ist die zweite Gewindemutter auf der vom ersten Lager abgewandten Seite des zweiten Lagers angeordnet. Von Vorteil ist dabei, dass die Gewindemutter von außen betätigbar ist.

Bei einer vorteilhaften Ausgestaltung ist das erste Lager ein Schräglager, insbesondere ein Zylinderrollenlager oder ein Kegelrollenlager, und das zweite Lager ist ein Schräglager, insbesondere ein Zylinderrollenlager oder ein Kegelrollenlager. Von Vorteil ist dabei, dass eine hohe Lagerspannung einstellbar ist.

Erfindungsgemäß weist das Gehäuse ein erstes Gehäuseteil auf, welches den ersten Innengewindeabschnitt aufweist, und ein zweites Gehäuseteil auf, welches den zweiten Innengewindeabschnitt aufweist, wobei das erste mit dem zweiten Gehäuseteil mittels Schrauben verbunden ist. Von Vorteil ist dabei, dass eine vereinfachte Montage ausführbar ist bei einer Welle, deren Wellendurchmesser in axialer Richtung nicht monoton verläuft.

Erfindungsgemäß ist in der zweiten Gewindemutter, insbesondere in einer mittig in der zweiten Gewindemutter angeordneten, axial durchgehenden Ausnehmung der zweiten Gewindemutter, ein Deckelteil aufgenommen ist, welches eine mittig in der zweiten Gewindemutter angeordnete, axial durchgehende Ausnehmung insbesondere öldicht verschließt und/oder abdeckt, oder in der zweiten Gewindemutter, insbesondere in einer mittig in der zweiten Gewindemutter angeordneten, axial durchgehenden Ausnehmung der zweiten Gewindemutter, ist ein Wellendichtring aufgenommen, welcher zur Welle hin, insbesondere öldicht, abdichtet oder abdeckt. Von Vorteil ist dabei, dass einer der beiden axialen Endbereiche der Welle abdeckbar ist, also gehäusebildend umgebbar ist.

Bei einer vorteilhaften Ausgestaltung ist in der ersten Gewindemutter, insbesondere in einer mittig in der ersten Gewindemutter angeordneten, axial durchgehenden Ausnehmung der ersten Gewindemutter, ein Wellendichtring aufgenommen, welcher zur Welle hin, insbesondere öldicht, abdichtet oder abdeckt. Von Vorteil ist dabei, dass die Welle durch den Wellendichtring nach axial außen hervorragt und abgedichtet ist.

Bei einer vorteilhaften Ausgestaltung ist das erste Verzahnungsteil mit einem zweiten Verzahnungsteil im Eingriff, insbesondere wobei die Drehachse des ersten Verzahnungsteils senkrecht zur Drehachse des zweiten Verzahnungsteils ausgerichtet ist. Von Vorteil ist dabei, dass das Spiel einer Winkelgetriebestufe erfindungsgemäß einstellbar ist.

Bei einer vorteilhaften Ausgestaltung ist die Winkelgetriebestufe eine Hypoidgetriebestufe oder eine Spiroplangetriebestufe. Von Vorteil ist dabei, dass mittels der Spieleinstellung, insbesondere zur Minimierung des Spiels, die Standzeit und der Wirkungsgrad der Winkelgetriebestufe optimierbar ist.

Erfindungsgemäß nimmt der Außendurchmesser der Welle in axialer Richtung monoton, insbesondere stufenartig, ab, zwischen dem ersten und dem zweiten Lager, unter Vernachlässigung einer Nut, in welcher ein Sicherungsring aufgenommen ist, insbesondere wobei der Innenring des ersten Lagers gegen den Sicherungsring angestellt ist und/oder wobei der Innenring des ersten Lagers über zumindest eine zwischengeordnete Passscheibe auf den Sicherungsring drückt. Von Vorteil ist dabei, dass eine einfache Montage ermöglicht ist.

Bei einer vorteilhaften Ausgestaltung nimmt, insbesondere von der ersten Stirnseite der Welle, der Außendurchmesser der Welle in axialer Richtung monoton, insbesondere stufenartig, zu bis zu einem Maximum, insbesondere zu einem maximalen Plateau, und dann bis zum axialen Endbereich, insbesondere andere Stirnseite der Welle, ab, insbesondere unter Vernachlässigung einer Nut, in welcher ein Sicherungsring aufgenommen ist, insbesondere wobei der Innenring des ersten Lagers gegen den Sicherungsring angestellt ist und/oder wobei der Innenring des ersten Lagers über zumindest eine zwischengeordnete Passscheibe auf den Sicherungsring drückt. Von Vorteil ist dabei, dass eine von axial beiden Seiten herkommende Montage ermöglicht ist.

Wichtige Merkmale bei dem Verfahren zum Herstellen eines Getriebes sind, dass in einem ersten Verfahrensschritt durch Schrauben der ersten und zweiten Gewindemutter die Lagerspannung der beiden Lager eingestellt wird, insbesondere die Gewindemuttern nicht synchron geschraubt werden, und in einem zeitlich nach dem ersten Verfahrensschritt ausgeführten zweiten Verfahrensschritt, die erste und zweite Gwindemutter durch synchrones Schrauben zur Einstellung des axialen Spiels zwischen den beiden Verzahnungsteilen, insbesondere zur Minimierung des axialen Spiels zwischen den beiden Verzahnungsteilen, gedreht werden.

Von Vorteil ist dabei, dass mittels bloßer Wahl der Betätigungsart die Lagerspannung oder das Spiel in der Winkelgetriebestufe einstellbar ist. Durch asynchrones Schrauben der Gewindemuttern ist die Lagerspannung und durch synchrones Schrauben ist das Lagerspiel einstellbar.

Weitere Vorteile ergeben sich aus den Unteransprüchen.

Die Erfindung wird nun anhand von schematischen Abbildungen näher erläutert:
In der Figur 1 ist ein Querschnitt durch den Bereich einer ersten Getriebestufe eines nicht erfindungsgemäßes Getriebes dargestellt, wobei in einer ersten Gewindemutter 9 ein Deckelteil 9 als Einschlagdeckel aufgenommen ist.

In der Figur 2 ist ein erfindungsgemäßes Getriebe dargestellt, wobei im Unterschied zur Figur 1 die Welle 20 im Getriebe einen in axialer Richtung monoton ansteigenden Durchmesser aufweist.

In der Figur 3 ist ein weiteres erfindungsgemäßes Getriebe wobei im Unterschied zur Figur 1 und Figur 2 statt des Deckelteils 9 ein Wellendichtring 31 in der Gewindemutter 8 aufgenommen ist.

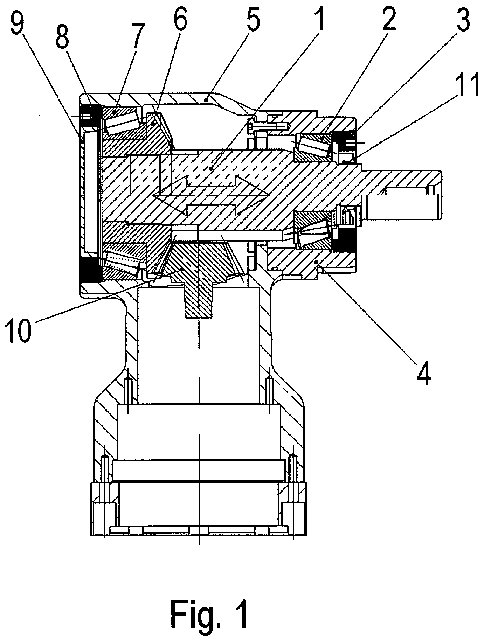

Wie in Figur 1 gezeigt, ist das Gehäuse des Getriebes zumindest zweiteilig ausgeführt. Hierzu ist ein erstes Gehäuseteil 4 mit einem zweiten Gehäuseteil 5 schraubverbunden, wobei Verbindungsschrauben durch eine durch das zweite Gehäuseteil 5 durchgehende Ausnehmung, insbesondere Bohrloch, hindurchragen und in axial gerichtete Gewindebohrungen des ersten Gehäuseteils 4 eingeschraubt sind, deren Schraubenkopf das zweite Gehäuseteil 5 auf das erste Gehäuseteil 4 drückt.

Im ersten Gehäuseteil 4 ist ein erstes Lager 2 aufgenommen zur drehbaren Lagerung einer Welle 1.

Das erste Lager 2 ist vorzugsweise als Schräglager, insbesondere Kegelrollenlager, ausgeführt.

Mit der Welle 1 ist ein erstes Verzahnungsteil 6, insbesondere Tellerrad, drehfest verbunden.

Die Verzahnung des ersten Verzahnungsteils 6 ist im Eingriff mit der Verzahnung eines zweiten Verzahnungsteils 10, welches an einer Wellenstufe der Welle 1 axial angestellt ist und somit in axialer Richtung begrenzt ist.

Das erste Gehäuseteil 4 weist einen Innengewindeabschnitt auf, in welche eine Gewindemutter 3 mit ihrem Außengewinde eingeschraubt ist. Mittels des Schraubens der Gewindemutter 3 wird deren axiale Position, also ihre Position in Richtung der Drehachse der Welle, verändert.

Das in dem ersten Gehäuseteil 4 aufgenommene erste Lager 2 weist einen Außenring auf, auf welchen die Gewindemutter 3 drückt, insbesondere in axialer Richtung.

Da der Innenring des Lagers 2 an einer Wellenstufe der Welle 1 angestellt ist, ist also durch Schrauben der Gewindemutter 3 das Lager 2, insbesondere dessen Außenring, verschiebbar oder zumindest die Lagerspannung einstellbar.

Mittig in der Gewindemutter 3 ist ein Wellendichtring 11 aufgenommen, welcher zur Welle 1 hin abdichtet. Hierzu weist die Gewindemutter 3 eine axial durchgehende Ausnehmung auf, in welcher der Wellendichtring 11 sitzt und deren Innendurchmesser größer ist als der Außendurchmesser der Welle 1.

Das erste Verzahnungsteil 6 ist als Nabe ausgeführt und auf die Welle 1 aufgesteckt. Dabei liegt es mit einer an der Innenwandung der Nabe ausgeformten in Umfangsrichtung umlaufenden Stufe an einer Wellenstufe der Welle 1 an. Vorzugsweise ist auch ein in Umfangsrichtung wirksames, formschlüssiges Anliegen eines an dem ersten Verzahnungsteil 6 ausgebildeten, nach radial innen hervorstehenden Nasenbereichs an einer entsprechenden radial gerichteten Vertiefung am Umfang der Welle 1 ausbildbar, so dass also ein in Umfangsrichtung wirksamer Formschluss ausbildbar ist.

Auf der vom ersten Gehäuseteil 4 abgewandten Seite der Verzahnung des ersten Verzahnungsteils 6 ist ein zweites Lager 7 auf das erste Verzahnungsteil 6 aufgesteckt.

Der Innenring des zweiten Lagers 7 ist an einer Stufe des ersten Verzahnungsteils 6 angestellt.

Das zweite Gehäuseteil 5 weist ebenfalls einen Innengewindeabschnitt auf, in welchen eine zweite Gewindemutter 8 mit ihrem Außengewinde eingeschraubt ist. Mittels des Schraubens der zweiten Gewindemutter 8 wird deren axiale Position, also ihre Position in Richtung der Drehachse der Welle, verändert.

Das in dem ersten Gehäuseteil 5 aufgenommene erste Lager 7 weist einen Außenring auf, auf welchen die zweite Gewindemutter 8 drückt, insbesondere entgegen der axialer Richtung.

Da der Innenring des Lagers 7 an der Stufe des ersten Verzahnungsteils 6 angestellt ist, ist also durch Schrauben der zweiten Gewindemutter 8 das Lager 7, insbesondere dessen Außenring, verschiebbar oder zumindest die Lagerspannung einstellbar.

Durch synchrones Schrauben der beiden Gewindemuttern 3 und 8 ist somit das erste Verzahnungsteil 6 axial verschiebbar zusammen mit der Welle 1 und den Lagern 2 und 7.

In der zweiten Gewindemutter 8 ist ein Deckelteil 9 in einer mittig in der zweiten Gewindemutter 8 ausgebildeten, axial durchgehenden Ausnehmung aufgenommen. Dabei verschließt das Deckelteil 9 diese Ausnehmung dicht, insbesondere öldicht.

Mittels der durch das synchrone Schraubbewegen der beiden Gewindemuttern 3 und 8 ist das Spiel der Getriebestufe einstellbar, insbesondere minimierbar.

Denn beim Verschieben des ersten Verzahnungsteils 6 wird das zweite Verzahnungsteil 10 nicht verschoben, sondern bleibt axial unverändert. Denn das zweite Verzahnungsteil 5 ist mit einer Welle verbunden, welche über weitere Lager gelagert sind, die relativ zum zweiten Gehäuseteil 5 axial festgelegt sind.

Die Drehachse des zweiten Verzahnungsteils 10 ist senkrecht zur axialen Richtung, also auch zur Drehachse des ersten Verzahnungsteils 6, ausgerichtet.

Die Verzahnungsteile 6 und 10 bilden daher eine Winkelgetriebestufe.

Vorzugsweise wird diese Winkelgetriebestufe als Spiroplangetriebestufe oder Hypolidgetriebestufe ausgeführt. Hierbei ist die Einstellung eines minimalen Spiels besonders wichtig, um eine hohe Standzeit zu erreichen.

Bei der Montage des Getriebes wird in einem ersten Verfahrensschritt die Lagerspannung der beiden Lager (2, 7) eingestellt, insbesondere durch nicht synchrones Schrauben der Gewindemuttern 3 und 8. Erst nach Einstellen der Lagerspannung wird das Spiel zwischen den beiden Verzahnungsteilen 6 und 10 verringert, indem die Gewindemuttern 3 und 8 synchron geschraubt werden, also mit derselben Drehrichtung und derselben Winkelgeschwindigkeit betätigt oder zumindest um denselben Winkelbetrag gedreht werden.

Die Welle weist in axialer Richtung einen zunächst monoton, insbesondere stufenartig, anwachsenden Außendurchmesser auf, bis ein axial zwischen den beiden Lagern (2, 7) angeordnetes Maximum, insbesondere maximales Plateau, erreicht ist, und danach einen monoton, insbesondere stufenartig, abnehmenden Außendurchmesser auf.

Eintriebsseitig, also auf der vom zweiten Lager 7 abgewandten Seite des Lagers 2, ist ein kleinerer Wellendurchmesser vorhanden als am anderen Endbereich der Welle 1.

Das erste Lager 2, insbesondere der Innenring des ersten Lagers 2, weist einen kleineren Innendurchmesser auf als das zweite Lager 7. Somit ist eintriebsseitig die erzeugte Verlustleistung geringer.

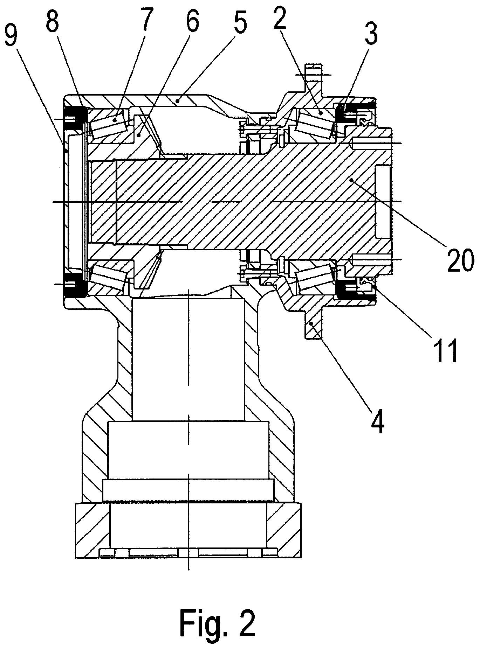

Wie in Figur 2 gezeigt, weist die Welle einen entgegen der axialen Richtung monoton, insbesondere stufenartig, abnehmenden Außendurchmesser auf, so dass die beiden Lager 2 und 7 ungefähr gleich groß sind, da die Differenz des Wellendurchmessers durch die Wandstärke des als Nabe ausgeführten ersten Verzahnungsteils 6 ausgeglichen ist.

Auch bei Figur 2 ist die Welle an ihrem entgegen der axialen Richtung gesehen angeordneten Endbereich von einem Deckelteil 9 abgedeckt, so dass die Welle 1 nicht herausgeführt ist.

Das Deckelteil 9 ist vorzugsweise aus Stahlblech ausgeführt.

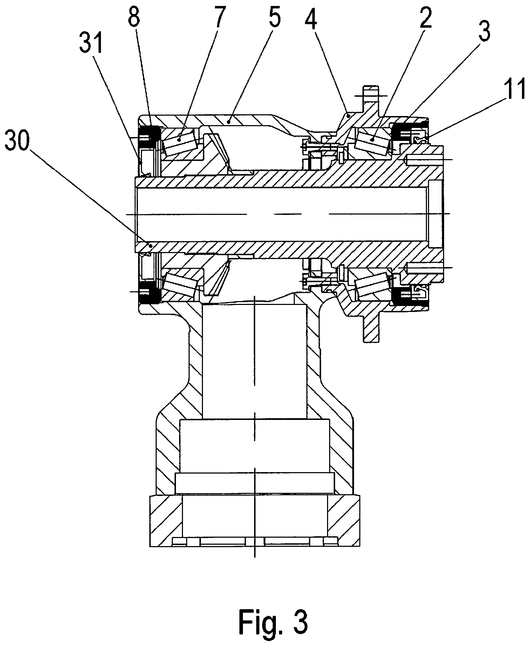

Wie in Figur 3 gezeigt, ist dort die Welle beidseitig herausgeführt, so dass abtriebsseitig ein Wellendichtring 31, der in der zweiten Gewindemutter 8 aufgenommen ist, zur Welle 1 hin abdichtet.

Die Welle 1 weist auch hierbei einen entgegen der axialen Richtung monoton, insbesondere stufenartig, abnehmenden Außendurchmesser auf.

Wie in Figur 2 und 3 jeweils gezeigt, ist der monotone Verlauf des Außendurchmessers mit Ausnahme einer Nut zu verstehen, in welcher ein Sicherungsring angeordnet ist, gegen welchen der Innenring des ersten Lagers 2 angestellt ist und/oder wobei der Innenring des ersten Lagers 2 über zumindest eine zwischengeordnete Passscheibe auf den Sicherungsring drückt.

Zwar grenzt der Innenring des ersten Lagers 2 an seiner vom Sicherungsring und/oder von der Passscheibe abgewandten Seite an eine Stufe der Welle; jedoch erfolgt dies kraftfrei und/oder spielbehaftet, da die Vorspannung über den Sicherungsring übertragen wird. Die Stufe der Welle dient nur der formschlüssigen Sicherung des Innenrings zwischen dem Sicherungsring und der Stufe.

Bei einem alternativen Ausführungsbeispiel ist statt dem monoton abnehmenden Verlauf des Außendurchmessers auch ein monoton zunehmender Verlauf des Außendurchmessers ausführbar, wiederum ausgenommen einer Nut für den Sicherungsring, gegen welchen ein Innenring eines Lagers angestellt ist und/oder wobei ein Innenring über zumindest eine zwischengeordnete Passscheibe auf den Sicherungsring drückt.

Bei weiteren erfindungsgemäßen Ausführungsbeispielen ist das Deckelteil 9 vorzugsweise aus Kunststoff ausgeführt.

### Bezugszeichenliste

1 Welle
2 erstes Lager
3 Gewindemutter
4 erstes Gehäuseteil
5 zweites Gehäuseteil
6 erstes Verzahnungsteil, insbesondere Tellerrad
7 zweites Lager
8 zweite Gewindemutter
9 Deckelteil
10 zweites Verzahnungsteil, insbesondere Kegelritzel
11 Wellendichtring
20 Welle
30 Welle, insbesondere Hohlwelle
31 Wellendichtring

## Patentansprüche

1. Getriebe mit Winkelgetriebestufe und Gehäuse,
wobei ein erstes Verzahnungsteil (6) der Winkelgetriebestufe mit einer Welle (20) drehfest verbunden ist,
wobei die Welle (20) zusammen mit dem ersten Verzahnungsteil (6) über ein erstes Lager (2) und über ein zweites Lager (7) drehbar gelagert ist,
wobei das erste Lager (2) im Gehäuse aufgenommen ist und das zweite Lager (7) im Gehäuse aufgenommen ist,
wobei das Gehäuse einen ersten Innengewindeabschnitt und einen davon axial beabstandeten zweiten **Innengewindeabschnitt** aufweist,
wobei eine in den ersten Innengewindeabschnitt eingeschraubte Gewindemutter (3), insbesondere in axialer Richtung, auf den Außenring des ersten Lagers (2) drückt,
wobei der Innenring des ersten Lagers (2) gegen eine Stufe der Welle (20) angestellt ist,
wobei eine in den zweiten Innengewindeabschnitt eingeschraubte, zweite Gewindemutter (8), insbesondere entgegen der axialen Richtung, auf den Außenring des zweiten Lagers (7) drückt,
wobei der Innenring des zweiten Lagers (7) gegen das erste Verzahnungsteil (6), insbesondere gegen eine Stufe des ersten Verzahnungsteils (6), oder gegen eine Stufe der Welle (20) angestellt ist,
wobei in der zweiten Gewindemutter (8) insbesondere in einer mittig in der zweiten Gewindemutter (8) angeordneten, axial durchgehenden Ausnehmung der zweiten Gewindemutter (8) ein Deckelteil (9) aufgenommen ist, welches eine mittig in der zweiten Gewindemutter (8) angeordnete, axial durchgehende Ausnehmung insbesondere öldicht verschließt und/oder abdeckt,
oder dass in der zweiten Gewindemutter (8), insbesondere in einer mittig in der zweiten Gewindemutter (8) angeordneten, axial durchgehenden Ausnehmung der zweiten Gewindemutter (8), ein Wellendichtring (31) aufgenommen ist, welcher zur Welle (20) hin, insbesondere öldicht, abdichtet oder abdeckt,
wobei das Gehäuse ein erstes Gehäuseteil (4) aufweist, welches den ersten Innengewindeabschnitt aufweist, und ein zweites Gehäuseteil (5) aufweist, welches den zweiten Innengewindeabschnitt aufweist,
wobei das erste (4) mit dem zweiten (8) Gehäuseteil mittels Schrauben verbunden ist,
wobei der Außendurchmesser der Welle (20) in axialer Richtung monoton, insbesondere stufenartig, zwischen dem ersten (2) und dem zweiten (7) Lager unter Vernachlässigung einer Nut, in welcher ein Sicherungsring aufgenommen ist, abnimmt.

2. Getriebe nach Anspruch 1, **dadurch gekennzeichnet, dass** die erste Gewindemutter (3) auf der vom zweiten Lager (7) abgewandten Seite des ersten Lagers (2) angeordnet ist.

3. Getriebe nach einem der vorangegangenen Ansprüche, **dadurch gekennzeichnet, dass** die zweite Gewindemutter (8) auf der vom ersten Lager (2) abgewandten Seite des zweiten Lagers (7) angeordnet ist.

4. Getriebe nach einem der vorangegangenen Ansprüche, **dadurch gekennzeichnet, dass** das erste Lager (2) ein Schräglager ist, insbesondere ein Zylinderrollenlager oder ein Kegelrollenlager, und/oder dass das zweite Lager (7) ein Schräglager ist, insbesondere ein Zylinderrollenlager oder ein Kegelrollenlager.

5. Getriebe nach einem der vorangegangenen Ansprüche, **dadurch gekennzeichnet, dass** in der ersten Gewindemutter (3), insbesondere in einer mittig in der ersten Gewindemutter (3) angeordneten, axial durchgehenden Ausnehmung der ersten Gewindemutter (3), ein Wellendichtring (11) aufgenommen ist, welcher zur Welle (1) hin, insbesondere öldicht, abdichtet oder abdeckt.

6. Getriebe nach einem der vorangegangenen Ansprüche, **dadurch gekennzeichnet, dass** das erste Verzahnungsteil (6) mit einem zweiten Verzahnungsteil (10) im Eingriff ist, insbesondere wobei die Drehachse des ersten Verzahnungsteils (6) senkrecht zur Drehachse des zweiten Verzahnungsteils (10) ausgerichtet ist.

7. Getriebe nach einem der vorangegangenen Ansprüche, **dadurch gekennzeichnet, dass** die Winkelgestriebestufe eine Hypoidgetriebestufe oder eine Spiroplangetriebestufe ist.

8. Getriebe nach einem der vorangegangenen Ansprüche, **dadurch gekennzeichnet, dass** der Innenring des ersten Lagers (2) gegen den Sicherungsring angestellt ist und/oder wobei der Innenring des ersten Lagers (2) über zumindest eine zwischengeordnete Passscheibe auf den Sicherungsring drückt.

9. Verfahren zum Herstellen eines Getriebes **nach einem der vorangegangenen Ansprüche, dadurch gekennzeichnet, dass** in einem ersten Verfahrensschritt durch Schrauben der ersten und zweiten Gewindemutter (3, 8) die Lagerspannung der beiden Lager (2) eingestellt wird, insbesondere die erste und zweite Gewindemutter (3, 8) nicht synchron geschraubt werden, und in einem zeitlich nach dem ersten Verfahrensschritt ausgeführten zweiten Verfahrensschritt, die erste und zweite Gewindemutter (3, 8) durch synchrones Schrauben gedreht werden zur Einstellung des axialen Spiels zwischen den beiden Verzahnungsteilen (6, 10), insbesondere zur Minimierung des axialen Spiels zwischen den beiden Verzahnungsteilen.

## Claims

1. A gear unit having a right-angled gear stage and a housing,
wherein a first toothed part (6) of the right-angled gear stage is connected non-rotatably to a shaft (20),
wherein the shaft (20) together with the first toothed part (6) is rotatably mounted by way of a first bearing (2) and by way of a second bearing (7),
wherein the first bearing (2) is accommodated in the housing and the second bearing (7) is accommodated in the housing,
wherein the housing has a first internal thread portion and a second internal thread portion spaced apart axially therefrom,
wherein a threaded nut (3) screwed into the first internal thread portion, in particular in the axial direction, presses on the outer ring of the first bearing (2),
wherein the inner ring of the first bearing (2) is adjusted against a step of the shaft (20),
wherein a second threaded nut (8) screwed into the second internal thread portion, in particular counter to the axial direction, presses on the outer ring of the second bearing
wherein the inner ring of the second bearing (7) is adjusted against the first toothed part (6), in particular against a step of the first toothed part (6), or against a step of the shaft (20),
wherein
a cover part (9) is accommodated in the second threaded nut (8), in particular in an axially uninterrupted cutout of the second threaded nut (8) arranged centrally in the second threaded nut (8), which cover part, in particular in an oil-tight manner, closes and/or covers an axially uninterrupted cutout arranged centrally in the second threaded nut (8),
or that [sic] a shaft sealing ring (31) is accommodated in the second threaded nut (8), in particular in an axially uninterrupted cutout of the second threaded nut (8) arranged centrally in the second threaded nut (8), which shaft sealing ring, in particular in an oil-tight manner, seals off or covers towards the shaft (20),
wherein the housing has a first housing part (4) which has the first internal thread portion, and a second housing part (5) which has the second internal thread portion,
wherein the first (4) housing part is connected to the second (5) housing part by means of screwing,
wherein the external diameter of the shaft (20) in the axial direction decreases monotonically, in particular in a step-like manner, between the first (2) and the second (7) bearing, disregarding a groove in which a securing ring is accommodated.

2. A gear unit according to claim 1,
**characterised in that**
the first threaded nut (3) is arranged on that side of the first bearing (2) which faces away from the second bearing (7).

3. A gear unit according to one of the preceding claims,
**characterised in that**
the second threaded nut (8) is arranged on that side of the second bearing (7) which faces away from the first bearing (2).

4. A gear unit according to one of the preceding claims,
**characterised in that**
the first bearing (2) is an angular contact bearing, in particular a cylindrical roller bearing or a tapered roller bearing,
and/or **in that**
the second bearing (7) is an angular contact bearing, in particular a cylindrical roller bearing or a tapered roller bearing.

5. A gear unit according to one of the preceding claims,
**characterised in that**
a shaft sealing ring (11) is accommodated in the first threaded nut (3), in particular in an axially uninterrupted cutout of the first threaded nut (3) arranged centrally in the first threaded nut (3), which shaft sealing ring, in particular in an oil-tight manner, seals off or covers towards the shaft (1).

6. A gear unit according to one of the preceding claims,
**characterised in that**
the first toothed part (6) is engaged with a second toothed part (10),
in particular with the axis of rotation of the first toothed part (6) being oriented perpendicularly to the axis of rotation of the second toothed part (10).

7. A gear unit according to one of the preceding claims,
**characterised in that**
the right-angled gear stage is a hypoid gear stage or a Spiroplan gear stage.

8. A gear unit according to one of the preceding claims,
**characterised in that**
the inner ring of the first bearing (2) is adjusted against the securing ring, and/or with
the inner ring of the first bearing (2) pressing on the securing ring by way of at least one interposed shim.

9. A method for producing a gear unit according to one of the preceding claims, **characterised in that**
in a first method step the bearing stress of the two bearings (2) is set by screwing the first and second threaded nuts (3, 8), in particular the first and second threaded nuts (3, 8) are not screwed synchronously,
and in a second method step performed chronologically after the first method step the first and second threaded nuts (3, 8) are turned by synchronous screwing to set the axial play between the two toothed parts (6, 10), in particular to minimise the axial play between the two toothed parts.

## Revendications

1. Transmission avec un étage d'engrenage conique et un boîtier,
une première partie de denture (6) de l'étage d'engrenage conique étant reliée solidaire en rotation avec un arbre (20),
l'arbre (20) étant monté rotatif conjointement avec la première partie de denture (6) via un premier palier (2) et via un second palier (7),
le premier palier (2) étant logé dans le boîtier et le second palier (7) étant logé dans le boîtier,
le boîtier présentant une première section filetée intérieurement et une seconde section filetée intérieurement à distance axialement de celle-ci,
un écrou fileté (3), vissé dans la première section filetée intérieurement, faisant pression, en particulier dans une direction axiale, sur la bague externe du premier palier (2),
la bague interne du premier palier (2) étant appliquée contre un étage de l'arbre (20), un second écrou fileté (8), vissé dans la seconde section filetée intérieurement, faisant pression, en particulier à l'encontre de la direction axiale, sur la bague externe du second palier (7),
la bague interne du second palier (7) étant appliquée contre la première partie de denture (6), en particulier contre un étage de la première partie de denture (6), ou contre un étage de l'arbre (20),
une partie de couvercle (9) étant logée dans le second écrou fileté (8), en particulier dans un évidement continu axialement du second écrou fileté (8) agencé au centre du second écrou fileté (8), laquelle est agencée au centre du second écrou fileté (8), fermant et/ou recouvrant un évidement continu axialement, en particulier de manière étanche à l'huile,
ou en ce que dans le second écrou fileté (8), est logée une bague d'étanchéité d'arbre (31), en particulier dans un évidement continu axialement agencé au centre du second écrou fileté (8),qui assure l'étanchéité ou le recouvrement par rapport à l'arbre (20), en particulier de manière étanche à l'huile,
le'boîtier présentant une première partie de boîtier (4) qui présente la première section filetée intérieurement et une seconde partie de boîtier (5) qui présente la seconde section filetée intérieurement,
la première (4) étant reliée à la seconde (5) partie de boîtier au moyen de vis,
le diamètre extérieur de l'arbre (20) diminuant de manière monotone dans la direction axiale, en particulier par étages, entre le premier (2) et le second (7) palier, sans tenir compte d'une rainure dans laquelle est logée une bague de retenue.

2. Transmission selon la revendication 1,
**caractérisée en ce que**
le premier écrou fileté (3) est agencé sur le côté du premier palier (2) opposé au second palier (7).

3. Transmission selon l'une quelconque des revendications précédentes, **caractérisée en ce que**
le second écrou fileté (8) est agencé sur le côté du second palier (7) opposé au premier palier (2).

4. Transmission selon l'une quelconque des revendications précédentes, **caractérisée en ce que**
le premier palier (2) est un palier oblique, en particulier un palier à rouleaux cylindriques ou un palier à rouleaux coniques,
et/ou **en ce que**
le second palier (7) est un palier oblique, en particulier un palier à rouleaux cylindriques ou un palier à rouleaux coniques.

5. Transmission selon l'une quelconque des revendications précédentes, **caractérisée en ce que**
dans le premier écrou fileté (3), en particulier dans un évidement continu axialement du premier écrou fileté (3), agencé au centre dans le premier écrou fileté (3), est logé une bague d'étanchéité d'arbre (11) qui assure l'étanchéité ou le recouvrement par rapport à l'arbre (1), en particulier de manière étanche à l'huile.

6. Transmission selon l'une quelconque des revendications précédentes, **caractérisée en ce que**
la première partie de denture (6) vient en prise avec une seconde partie de denture (10),
en particulier, l'axe de rotation de la première partie de denture (6) étant orienté perpendiculairement à l'axe de rotation de la seconde partie de denture (10).

7. Transmission selon l'une quelconque des revendications précédentes, **caractérisée en ce que**
l'étage d'engrenage conique est un étage d'engrenage hypoïde ou un étage d'engrenage spiroplan.

8. Transmission selon l'une quelconque des revendications précédentes, **caractérisée en ce que**
la bague interne du premier palier (2) est appliquée contre la bague de retenue et/ou la bague interne du premier palier (2) est appliquée contre la bague de retenue au-dessus d'au moins une rondelle d'ajustement intercalée.

9. Procédé de fabrication d'une transmission selon l'une quelconque des revendications précédentes,
**caractérisé en ce que**
dans une première étape du procédé, la tension de palier des deux paliers (2) est réglée par vissage des premier et second écrous filetés (3, 8), en particulier les premier et second écrous filetés (3, 8) ne sont pas vissés de manière synchrone,
et dans une seconde étape de procédé exécutée dans le temps après la première étape de procédé, les premier et second écrous filetés (3, 8) sont tournés par vissage synchrone pour régler le jeu axial entre les deux parties de denture (6, 10), en particulier pour minimiser le jeu axial entre les deux parties de denture.
